# EUROPEAN PATENT SPECIFICATION

(11) **EP 2 085 304 B1**
(45) Date of publication and mention of the grant of the patent: **01.12.2010**
(21) Application number: 08018332.0
(22) Date of filing: 20.10.2008
(51) Int. Cl.: B62J 17/02

(54) **Floor structure of scooter type vehicle**
Bodenstruktur eines rollerartigen Fahrzeugs
Structure de plancher d'un véhicule de type scooter

(30) Priority: 31.01.2008 JP 2008022181
(43) Date of publication of application: 05.08.2009
(73) Proprietor: Honda Motor Co., Ltd., Minato-ku Tokyo 107-8556 (JP)
(72) Inventor: Okada, Naoki, Wako-shi, Saitama, 351-0193 (JP); Kitayama, Kyosuke, Wako-shi, Saitama, 351-0193 (JP)
(74) Representative: Liska, Horst

(56) References cited:
- US-A1- 2006 021 814
- US-A1- 2006 037 798
- US-A1- 2006 048 991

## Description

### Technical Field

The present invention relates generally to a scooter type vehicle and, in particular, to a floor structure with a tunnel portion advantageous to design.

### Background Art

There is known a floor structure of a scooter type vehicle provided with left and right foot-placed step floors and with a tunnel portion raised between the step floors. In this floor structure, the design flexibility of the tunnel portion is increased by arranging a separate decorative cover on the tunnel portion. However, the design flexibility of the conventional tunnel portion has been low to meet a demand for a reduction in size because of straddle by an operator and for making it less noticeable (Japanese Patent No. 3938652).

A scooter type vehicle having a floor structure according to the preamble of claim 1 is known from the document US 2006/021814 A1.

### Problem to be Solved by the Invention

If the separate decorative cover is arranged on the tunnel portion as described above, external appearance can be enhanced. However, the number of parts is increased because of addition of the decorative cover, which may probably lead to increased costs. It is conceivable that the tunnel portion could integrally be molded with another cover part to reduce the number of parts. If the tunnel portion is integrally molded with a body cover below a seat, such a constituent part is enlarged, which may probably lower the flexibility of design. Thus, it is difficult to achieve a balance between the increased flexibility of design and the reduced number of parts. The present invention will solve such a problem.

### Means for Solving the Problem

To solve the above problem, the invention according to claim 1 is a floor structure of a scooter type vehicle including: a pair of step floors on which feet of a rider sitting on a seat are placed; a tunnel portion upwardly bulging between the left and right step floors; a leg shield for covering from the front a foot of the rider sitting on the seat; and a tunnel portion side cover which covers at least a lateral surface of the tunnel portion; in that the leg shield includes a footrest portion extending forward from a corresponding step floor and a front side cover provided forward of the footrest portion to cover a lateral surface of a front end of a vehicle body; and in that the tunnel portion side cover is integrally molded with the front side cover, a front end of the tunnel portion side cover is joined to an upper end of the front side cover in an inverse V-shape and the front end of the step floor is allowed to conform to the inverse V-shape to integrally join the covers together,
**characterized in that** the tunnel portion side cover is provided at a portion above the footrest portion with a bulge portion protruding laterally of the vehicle, and wherein a recessed portion opened in the back and forth direction of the vehicle body is formed on the upper side of the bulge portion said recessed portion being adapted to guide running air from the front side of the vehicle body towards the rearward of the vehicle body.

The embodiment of claim 2 is **characterized in that** in claim 1, a front rising wall portion 61 joined to the footrest portion of the step floor is smoothly bent outwardly toward the front of the vehicle body.

The embodiment of claim 3 is **characterized in that** in any one of claims 1 or 2 described above, a rear end of the tunnel portion side cover is continuously and integrally joined to a front end of a rear side cover disposed below the seat.

### Effects of the Invention

According to the invention of claim 1, since the front side cover is integrally molded with the front side cover which is a relatively small part, the flexibility of designing the tunnel portion can be increased while reducing the number of parts. Further, since characteristic design such as forwardly extending the tunnel portion can be applied, the vehicle can be differentiated.

Furthermore, the front end of the tunnel portion side cover is joined to the upper end of the front side cover in an inverse V-shape and the front end of the step floor is allowed to conform to the inverse V-shape to integrally join the covers together. Thus, the inverse V-shape can make an impression as an accent in view of design.

In addition, a portion of the step floor is interposed between the footrest portion and the tunnel portion side cover to serve as a rising wall and to be continuous with the footrest portion. This makes it difficult for the occupant's foot to contact the tunnel portion side cover, which can prevent the tunnel portion side cover from getting dirty.

Since the bulge portion can make the footrest portion less visible from the rider, the impression of the leg shield seen from the rider can be made expensive-looking.

According to the embodiment of claim 2, when the occupant places a foot on the footrest, the foot can be placed such that its tiptoe is faced outwardly along the front rising wall portion. Thus, the occupant can mount on the vehicle in a more natural posture, which can improve the occupant comfort of the floor.

According to the embodiment of claim 3, since the tunnel portion side cover and the rear side cover are formed to be integrally continuous with each other from the front to rear of the vehicle, a sense of unity with respect to vehicle design can be improved.

### Brief Description of the Drawings

Fig. 1 is a lateral view of a scooter type motorcycle embodying the present invention.
Fig. 2 is a lateral view of an overall cover that covers a vehicle body.
Fig. 3 is a cross-sectional view taken along line 3-3 of Fig. 2.
Fig. 4 illustrates details of a tunnel side cover (A being a plan view and B being a lateral view).
Fig. 5 is a lateral view of a floor panel.
Fig. 6 sis a plan view of the floor panel.
Fig. 7 is a lateral view illustrating a state where the tunnel portion side cover is joined to the floor panel.
Fig. 8 is a plan view of Fig. 7.
Fig. 9 is a cross-sectional view taken along line 9-9 of Fig. 7.
Fig. 10 illustrates a joint structure at an A-portion of Fig. 7.
Fig. 11 is a cross-sectional view taken along line 11-11 of Fig. 7.

### Best Mode for Carrying Out the Invention

One embodiment will hereinafter be described with reference to the drawings.

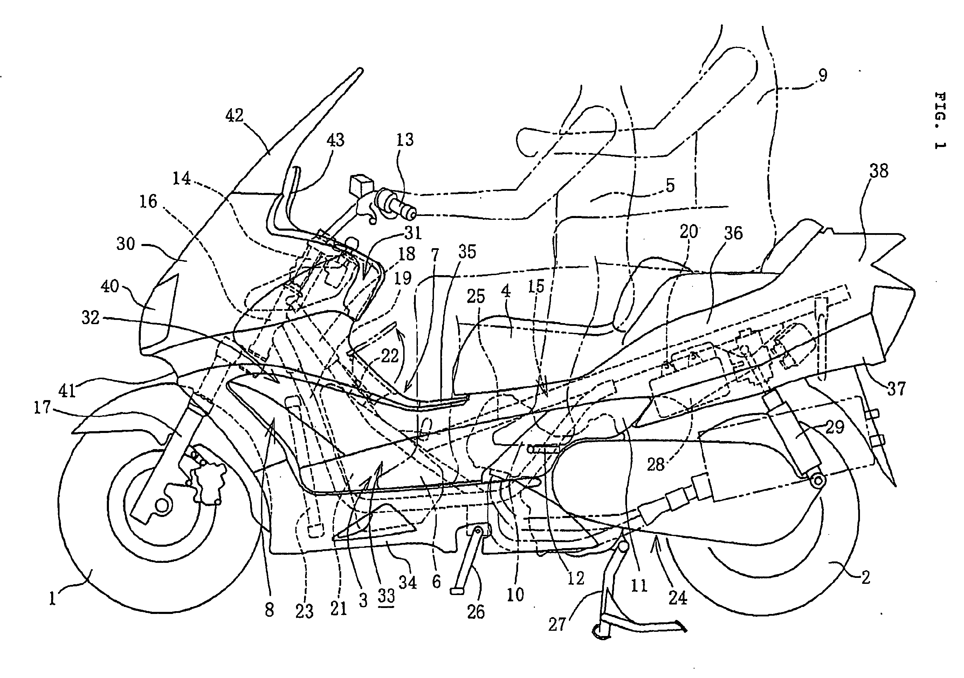

Fig. 1 is a lateral view of a scooter type motorcycle embodying the present invention. This vehicle is provided with a low-floor type step floor 3 between a front wheel 1 and a rear wheel 2. An occupant 5 sits on a seat 4 disposed above the rear end of the step floor 3 and places her or his feet on the step floor 3.

The step floor 3 is provided on each of the left and right of a central tunnel portion 7 put therebetween. A leg shield 8 is provided forward of the step floor 3 so as to cover the feet 6 from the front. The tunnel portion 7 is a portion of a body cover that is raised along the body center so as to be internally hollow. The seat 4 is of a tandem type in which feet 10 of a pillion passenger 9 are placed on pillion steps 12 provided on step holders 11.

A handlebar shaft 14 of a handlebar 13 steered by the occupant 5 is turnably supported by a head pipe 16 provided at the front end of a body frame 15. The handlebar shaft 14 is connected at a lower end to a front fork 17 supporting the front wheel 1. Thus, the front wheel 1 is steered by the handlebar 13.

The body frame 15 includes two upper and lower down frames and a rear frame 20. The down frames consist of a front upper frame 18 and a front lower frame 19 both extending obliquely downward and rearward from the head pipe 16. The rear frame 20 extends obliquely upward and rearward from a position close to the vertically intermediate portion of the front upper frame 18. The front lower frame 19 bends at a position below the step floor 3 to extend generally horizontally and rearward. In addition, the front lower frame 19 again bends at a position rearward of the step floor 3 to extend obliquely upward and rearward and connects with the anteroposteriorly intermediate portion of the rear frame 20.

A vertically long fuel tank 21 is supported between the front upper frame 18 and the front lower frame 19 so as to locate its bottom at a position below the step floor 3. A fill port 22 provided at the upper portion of the fuel tank 21 is located at a position near the internal upper surface of the tunnel portion 7 so that fuel can be fed from above the tunnel portion 7. The front upper frame 18, the front lower frame 19 and the fuel tank 21 are arranged inside the space of the tunnel portion 7. A radiator 23 is located forward of the fuel tank 21. The arrangement of such heavy loads contributes to mass concentration and to lower the center of gravity.

A front end of a swing type power unit 24 is swingably supported at a position near a portion of the front lower frame 19 that bends obliquely upward from the horizontal thereof. The rear wheel 2 is supported by a rear end of the power unit 24.

The power unit 24 includes a forwardly-inclined in-line multi-cylinder engine 25. Reference numeral 26 denotes a side stand, 27 denotes a main stand, 28 denotes a battery supported by the rear frame 20 at a position below the rear part of the seat 4, and 29 denotes a rear cushion unit.

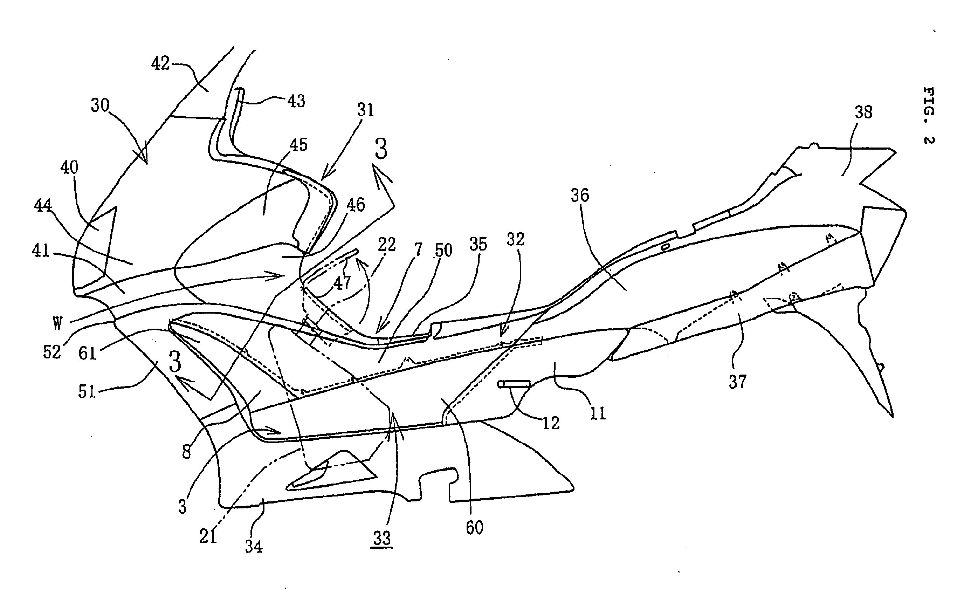

A description is hereinafter given of the body cover. Fig. 2 is a lateral view of the entire body cover that covers the vehicle body. The vehicle body cover includes a front cover 30 covering the head pipe 16 from the front; an inner cover 31 covering the head pipe 16 from the rear side; a tunnel portion side cover 32 forming a lateral portion of the tunnel portion 7; a floor panel 33 provided with the step floor 3 and with the leg shield 8; and a floor skirt panel 34 provided below the floor panel 33. The vehicle body further includes: a center cover 35 forming an upper portion of the tunnel portion 7 along with the inner cover 31; a rear side cover 36 serving as a seat lower cover; a rear side lower cover 37 attached below the rear side cover 36; and a rear side upper cover 38 attached to the rear end of the rear side cover 36.

These body cover constituent members are each made of resin. The tunnel portion side cover 32, the floor panel 33, the floor skirt panel 34, the rear side cover 36 and the rear side lower cover 37 are each provided as a pair of left and right ones.

A headlight 40 is provided at a front portion of the front cover 30 and turn signal lamps 41 are provided at left and right front portions of the front cover 30. A windshield 42 is integrally joined to an upper portion of the front cover 30. The front cover 30 is continuously provided from the front portion to the horizontal portion. A meter panel 43 is provided on the rear surface side of the windshield 42 to cover the upper side opening of the front cover 30. The rear surface side of the front cover 30 is covered from the vehicle body rear side by the inner cover 31.

A portion that is formed between the headlight 40 and each of the turn signal lamps 41 to reach the inner cover 31 serves an undercut slope 44 whose lower side portion extends into the inside of the vehicle body. In addition, a recessed portion is formed between such a portion and the inversely inclined tunnel portion side cover 32. This recessed portion is opened in the back and forth direction of the vehicle body to take in running air W from the front side and guide it to flow toward the rearward of the vehicle body.

The inner cover 31 includes a pair of left and right inner cover uppers 45 and an inner cover lower 46. The inner cover uppers 45 are continuous with a rear portion of the undercut slope 44 and extend rearward. A lower portion of the inner cover lower 46 is continuous with the tunnel portion side cover 32. The rear surface of the inner cover lower 46 extends rearward to form an upper surface of the tunnel portion 7. An oil-feeding lid 47 is provided at a portion of the upper surface of the tunnel portion 7 so as to be openable and closable. If the oil-feeding lid 47 is opened while its rear side is turned upward around a front side hinge, fuel can be fed into the fill port 22 of the fuel tank 21 housed in the tunnel portion 7.

Although detailed later, the tunnel side cover 32 is composed of a rising wall-like main body portion 50 and a front side cover 51 by integral resin-molding. The main body portion 50 serves as a lateral wall of the tunnel portion. The front side cover 51 bends toward the front of a foot rest portion (described later) of the leg shield 8 to be vertically formed, and covers the front end lateral surface of the vehicle body. An upper edge front end of a joint portion 52 between the main body portion 50 and the front side cover 51 reaches the front lower end of the turn signal lamp 41. A front edge of the front side cover 51 is formed as a portion of the front edge of the entire body cover.

As described above, if the front side cover 51 and the main body portion 50 are formed into a single piece, the top end of the main body portion 50 appears to continuously extend to the front end of the vehicle body. Thus, a distinguishing design can be applied to extend the tunnel portion 7 to the front of the vehicle body, which can provide differentiation of vehicles.

Although the floor panel 33 is also detailed later, it includes a lateral rising wall portion 60 and a front rising wall portion 61. The lateral rising wall portion 60 extends along the lower edge of the tunnel portion side cover 32 to form a lateral wall of the tunnel portion. The front rising wall portion 61 is a portion of the leg shield 8 and is formed generally triangular as viewed from the side.

The inner cover 31, the center cover 35, the main body portion 50 of the tunnel portion side cover 32, and the lateral rising wall portion 60 and front rising wall portion 61 of the floor panel 33 form the tunnel portion 7.

The front rising wall portion 61 is enclosed by the main body portion 50 and front side cover 51 of the tunnel portion side cover 32.

The floor skirt panel 34 is as below. A front end upper portion extends around the front of the lower portion of the leg shield 8 and is joined to the lower end portion of the front side cover 51. In addition, a portion rearward of the front end upper portion is joined to the outer edge portion of the step floor 3.

A front end of the rear side cover 36 is joined to the rear end of the main body portion 50 and the rear side lower cover 37 overlaps the lower end of the rear side cover 36. Since the rear side cover 36 and the rear side lower cover 37 are separated from each other, design flexibility can be increased by allowing the materials, colors or the like of the rear covers to differ from each other. Coloration of the body cover will be described later. The rear side upper cover 38 is attached to cover the respective rear ends of the rear side cover 36 and of the rear side lower cover 37.

The step holder 11 is disposed in a space enclosed by the rear end of the lateral rising wall portion 60, the front lower edge of the rear side cover 36, the front edge of the rear side lower cover 37 and the rear edge of the floor skirt panel 34.

The step holder 11 is a metal plate attached to a portion that is a rear portion of the front lower frame 19 and that extends obliquely upward toward the rear frame 20. The pillion step 12 is provided at the step holder 11 so as to be retractable.

A description is here given of coloration of the cover members. It is preferred that the floor panel 33 should basically have black colors because of serving as a foot-placed portion. The step holder 11 and the rear side lower cover 37 horizontally juxtaposed to the floor panel 33 are allowed to have the same colors, which can provide a sense of unity.

On the other hand, the tunnel portion side cover 32 is allowed to have other colors (e.g. non-black colors such as white, red and the like) than those of the floor panel 33. Thus, the external colors of the vehicle are configured to realize the variation of design. In this case, the rear side cover 36, the front cover 30, the floor skirt panel 34 are allowed to have the same colors. Thus, the lateral surface of the body cover lateral portion can vertically be depicted in two-tone colors. Further, the inner cover 31 may be allowed to have the same or different colors as or from those of the tunnel portion side cover 32.

As described above, the tunnel portion side cover 32, the main body portion 50 and the front side cover 51 are formed into a single piece to increase the flexibility of design. In particular, the front side cover 51 may be separated from the main body portion 50 of the tunnel portion side cover 32 so as to be a separate member as in the traditional way. In such a case, it is desired that the front side cover 51 be united with another cover member in order to reduce the number of component parts. If the front side cover 51 is united with e.g. the leg shield 8, color is basically limited to black to eliminate the flexibility of coloration.

However, the front side cover 51 is united with a naturally large-sized cover member such as the front cover 30, the floor skirt panel 34 or the like, resulting in further enlargement. Consequently, it is difficult to allow only the front side cover 51 among them to have uniquely free design, shape or the like. In addition, also a mold is enlarged. In short, it is a reality that it is difficult for the front side cover 51 to be united with such cover members.

In contrast to this, the present invention unites the relatively small-sized front side cover 51 with the main body portion 50 of the tunnel portion side cover 32. That is to say, the united cover is made not large-sized so much. Thus, it is possible to balance opposing requests, that is, a reduction in the number of component parts (a suppressed increase) and an improvement in the flexibility of design.

Since the tunnel portion side cover 32 and the rear side cover 36 are configured so as to be integrally continuous with each other from the front portion to rear portion of the vehicle, a sense of unity of vehicle design can be improved.

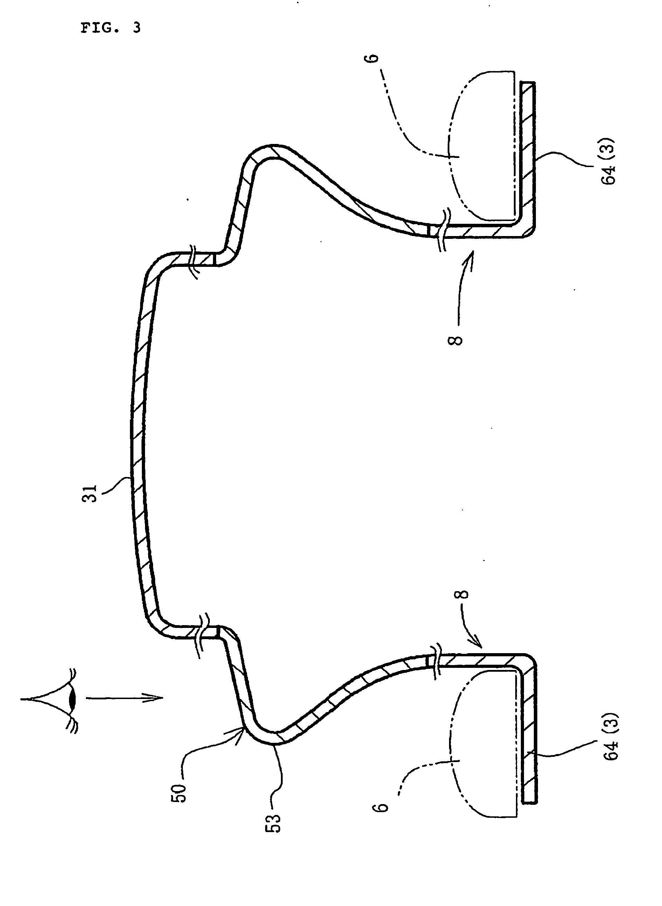

Fig. 3 is a cross-sectional view taken along line 3-3 of Fig. 2. The main body portion 50 is formed as a bulge portion 53 protruding above the inner cover 31. With this, the leg shield 8, particularly, a footrest portion (described later) which is part of the leg shield and is a flat surface opposed to the rider side, cannot be seen from the rearward occupant. Thus, the design of the step floor 3 seen from the occupant can provide expensive-looking.

A recessed groove is formed on the upper side of the bulge portion 53 and between the undercut slope 44 (Fig. 2) of the front cover 30 and the inner cover 31. However, the bulge portion 53 can prevent running air passing through the recessed groove from flowing around the occupant's foot. A space enclosed by the inner cover 31 and by the main body portion 50 forms the tunnel portion 7.

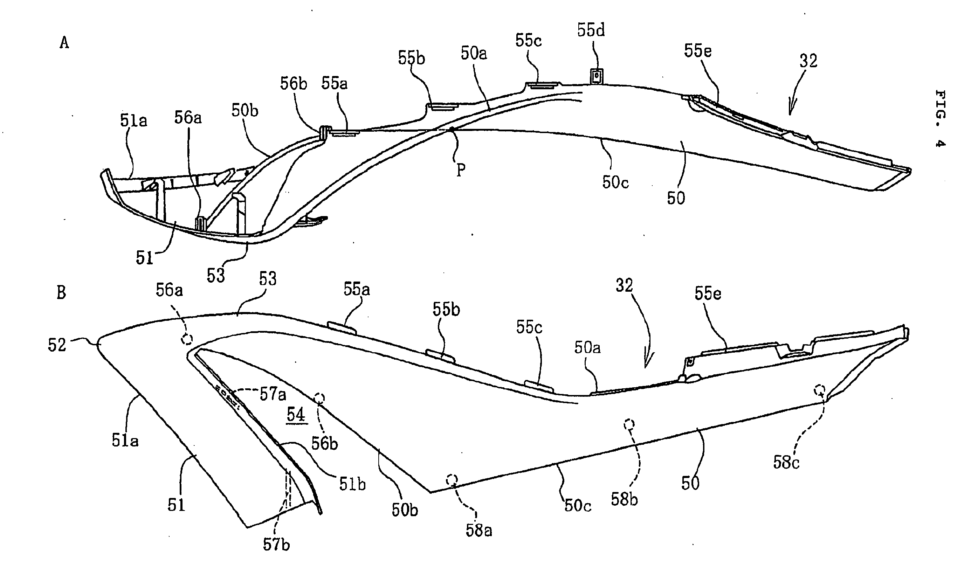

Fig. 4 illustrates details of the tunnel portion side cover 32, A being a plan view and B being a lateral view. The main body portion 50 bends such that the anteroposteriorly intermediate portion most extends inwardly of the vehicle body to enlarge the width of the foot-placed portion of the step floor 3 described later, which makes foot-reaching performance satisfactory. In addition, an upper edge 50a bends to gradually protrude outwardly of the vehicle body toward the front from the inwardly extending portion, forming the bulge portion 53. The bulge portion 53 makes the leg shield 8 less visible from the rider's eyesight as described above. The upper edge 50a reaches the upper portion of the front side cover 51 therefrom and then bends again to extend inwardly of the vehicle body.

Since the bulge portion 53 is formed as described above, the upper edge 50a and a lower edge 50c of edges forming the circumference of the main body portion 50 intersect each other at a point P of the anteroposteriorly intermediate portion as viewed from above. In the edge forward of the point P, a joint portion between the front edge 50b and the lower edge 50c is located vehicle body-inside of the upper edge 50a. In the edge rearward of the point P, the lower edge 50c extends outward from the lower edge 50c and further extends rearward at a curvature larger than that of the upper edge 50a. In short, the main body portion 50 is formed such that front and rear portions with the point P put therebetween are twisted inwardly and outwardly, i.e., reversely with each other.

The front edge 50b of the main body portion 50 is inclined forwardly and obliquely upwardly so that a V-shaped space 54 as viewed from the side may be defined between the front edge 50b and the rear edge 51 b of the front side cover 51. The front edge 50b bends to extend inward of the upper edge 50a from the front to the rearward and connects with the front end of the lower edge 50c at the lowest portion.

The upper edge 50a connects with the lower edge of the inner cover 31 and the front edge 50b and the lower edge 50c connect with an inward line of the floor panel 33 as viewed from the above. The front edge 51a and rear edge 51 b of the front side cover 51 is generally parallel with each other and the lower edge 51 c connects with the front end upper portion of the floor skirt panel 34.

The upper edge 50a is formed with engaging projections 55a, 55b, and 55c for attachment with the inner cover 31. The engaging projections 55a, 55b, and 55c project in the back and forth direction, are spaced from each other at appropriate intervals and are engaged with the lower end of the inner cover 31. The upper edge 50a is formed on the rear side with a stay 55d (A of Fig. 4) which projects generally horizontally and inwardly of the vehicle body and screwed to the inner cover 31. The upper edge 50a is formed at a rear end with a flange 55e which projects therefrom below the seat 4.

The front edge 50b is formed at an upper portion with a boss 56a which projects inwardly of the vehicle body and is screwed to the upper end of the front rising wall portion 61. The front edge 50b is formed with a similar boss 56b at a vertically intermediate portion.

Bosses 58a, 58b, and 58c are formed on the forward portion along the lower edge 50c to project inward of the vehicle body and screwed to the lateral rising wall portion 60.

The rear edge 51 b, facing the space 54, of the front side cover 51 is formed like an outwardly bent flange, which is lapped on a front edge of the front rising wall portion 61. In addition, its upper side portion is engaged with the front rising wall portion 61 at an attachment portion 57a. The rear edge 51 b is formed with a fastening portion 57b at a lower end and screwed to the front edge lower portion of the front rising wall portion 61. These joint structures are described later.

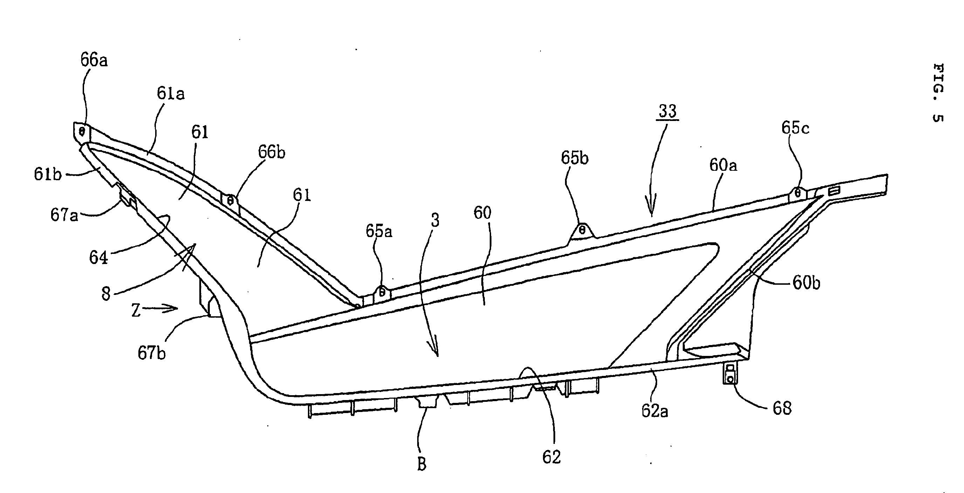

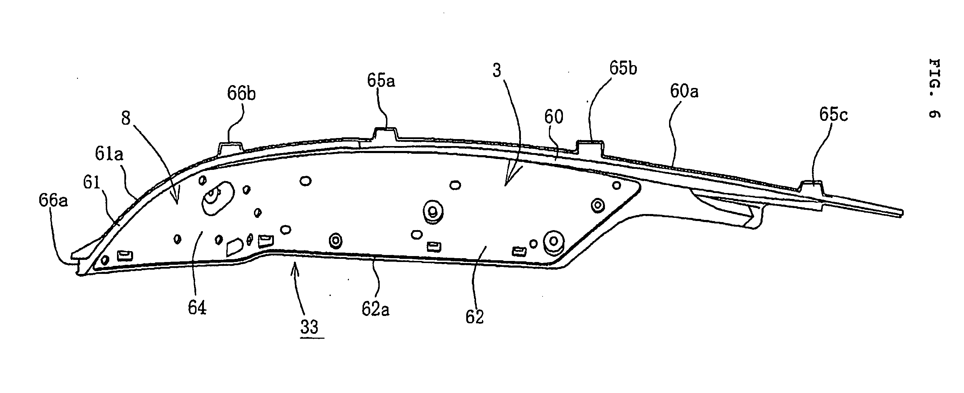

Fig. 5 is a lateral view of the floor panel 33 and Fig. 6 is a plan view of Fig. 5. As shown in Figs. 5 and 6, the floor panel 33 is formed by uniting the step floor 3 with the leg shield 8. The step floor 3 includes a flat foot-placed portion 62 and the lateral rising wall portion 60. The leg shield 8 is formed like a forwardly upwardly inclined surface as viewed from the side and integrally includes a footrest portion 64 flat as viewed from above and the front rising wall portion 61. These portions are integrally formed as a whole to provide the floor panel 33. Incidentally, the foot-placed portion 62 and the footrest portion 64 are formed as a continuous plane, which is covered with a floor mat not shown.

With this configuration, when the occupant 5 places a foot 6 on the footrest portion 64, the foot 6 can be placed such that its tiptoe is faced outwardly along the front rising wall portion 30. Thus, the occupant can mount on the vehicle in a more natural posture, which can improve occupant comfort.

The upper edge 60a of the lateral rising wall portion 60 is formed with attachment projections 65a, 65b, and 65c in the back and forth direction. An upper edge 61 a of the front rising wall 61 is formed with an attachment projection 66a at a front end and with an attachment projection 66b at an intermediate portion rearward of the front end. A lower edge 61 b of the front rising wall portion 61 is provided with an engaging projection 67a on the upper side and with a boss 67b on the lower side.

The upper edge of the floor skirt panel 34 is engaged with and joined to an outer edge 62a of the foot-placed portion 62 from the lower surface side. A stay 68 is formed on a rear extension of the outer edge 62a so as to project downward therefrom and is screwed to the floor skirt panel 34.

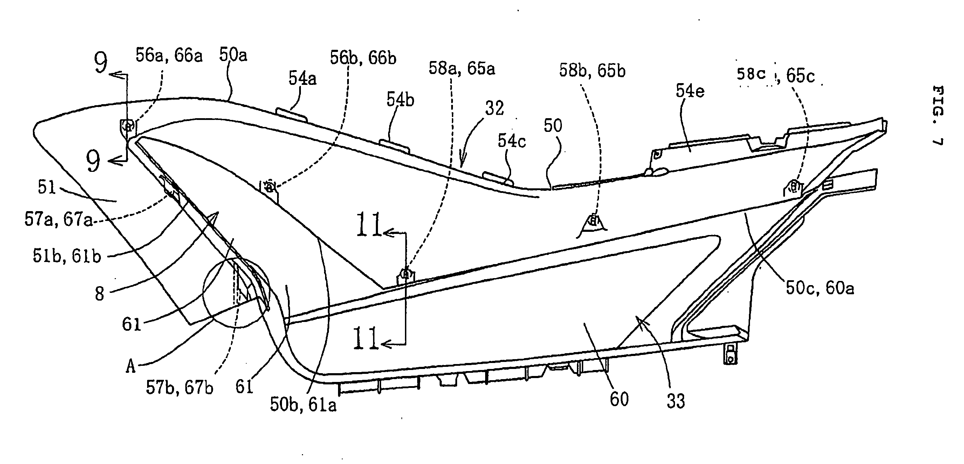

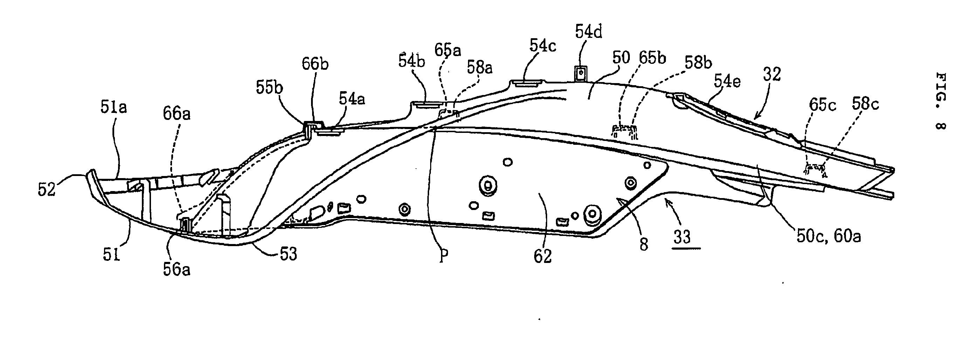

Fig. 7 is a lateral view of a state where the tunnel portion side cover 32 is joined to the floor panel 33 and Fig. 8 is a plan view of Fig. 7. As shown in Figs. 7 and 8, the tunnel portion side cover 32 and the floor panel 33 are such that the lower edge 50c is joined to the upper edge 60a (Fig. 8) and the bosses 58a, 58b, and 58c are coupled to the attachment projections 65a, 65b, and 65c, respectively. The front edge 50b is joined to the upper edge 61 a and the bosses 56a and 56b are coupled to the attachment projections 66a and 66b, respectively (Fig. 7).

In addition, the lower edge 61 b is joined to the rear edge 51 b and the attachment portions 57a and 57b are coupled to the engagement projection 67a and the boss 67b, respectively (Fig. 7).

Further, the front end of the main body portion 50 of the tunnel portion side cover 32 is joined to the upper end of front side cover 51 to provide an inverse V-shape therebetween. The foot rest portion 64 which is a front end of the extension of the step floor 3 and the front rising wall portion 61 are formed so as to conform to the inverse V-shape. In this way, since such covers are integrally joined together, the inverse V-shaped portion can make an impression as an accent in view of design.

In addition, a portion of the step floor 3 is interposed between the footrest portion 64 and the tunnel portion side cover 32 to serve as a rising wall and to be continuous with the footrest portion 64. This makes it difficult for the occupant's foot to contact the tunnel portion side cover 32, which can prevent the tunnel portion side cover 32 from getting dirty.

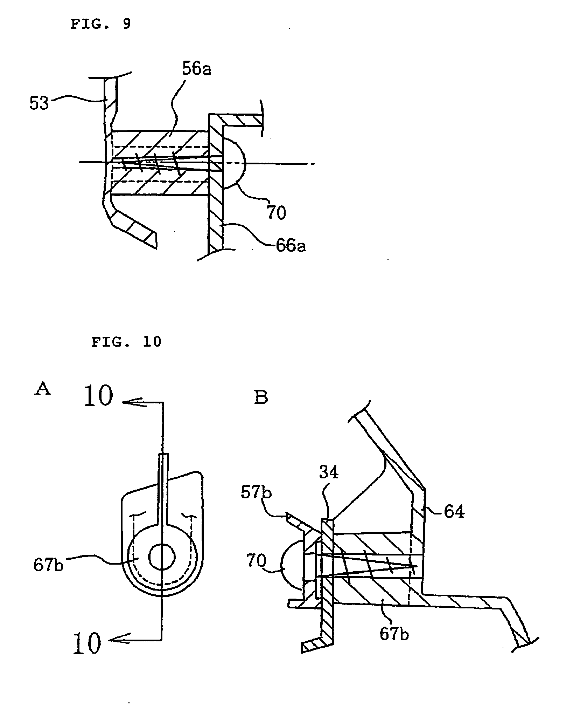

Fig. 9 is a cross-sectional view taken along line 9-9 of Fig. 7. The attachment projection 66a is lapped on the boss 56 from the inside of the vehicle body and is screwed with a tapping screw 70. The same applies to the attachment structure of the boss 56b with the attachment projection 66b.

Fig. 10 illustrates a joint structure at an A-portion of Fig. 7. Fig. 10A illustrates the boss 67b as viewed from arrow Z of Fig. 5 and Fig. 10B is a cross-sectional view illustrating the boss 67b taken along line 10-10 of Fig. 10A. As shown in the figures, the upper end portion of the floor skirt panel 34 is lapped on the boss 67b from the front thereof and the attachment portion 57b of the front side cover 51 is further lapped on the upper end portion of the floor skirt panel 34 from the front thereof. In addition, the three members are screw-joined together by being co-fastened to one another with a tapping screw 70 from the front of the vehicle body for screwing integration.

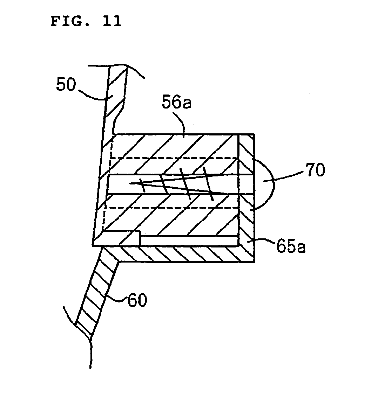

Fig. 11 is a cross-sectional view taken along line 11-11 of Fig. 7. The attachment projection 65a is lapped on the boss 56a from the inside of the vehicle body and screwed thereto with a tapping screw 70. The same applies to the attachment of the boss 56b with the attachment projection 65b and to the attachment of the boss 56c with the attachment projection 65c.

Incidentally, the present invention is not limited to the embodiment described above but can be modified or applied in various ways within the principles thereof. For example, the tunnel portion side cover 32 is not necessarily formed on each of the left and right of the tunnel portion 7. The tunnel portion side cover 32 can integrally be formed also on the upper surface of the tunnel portion 7.

The invention is directed to increase the flexibility of design of a tunnel portion lateral surface without increasing the number of parts.

Low-floor type step floors 3 and leg shields 8 forward of the corresponding step floors 3 are provided between a front wheel 1 and a rear wheel 2. A tunnel portion 7 is provided between the left and right step floors 3 and a seat 4 is disposed rearward of the step floors 3. A lateral surface of the tunnel portion 7 is formed of a tunnel portion side cover 32 and a floor panel 33. Of them, the tunnel portion side cover 32 is formed by uniting a main body portion 50 with a front side cover 51 forward of the leg shield 8. The tunnel portion side cover 32 is joined to the outer edge of the floor panel 33 integrally including a lateral rising wall portion 60, a front rising wall portion 61, the step floor 3 and the leg shield 8. The leg shield 8 is received in a generally V-shaped space defined between the main body portion 50 and the front side cover 51.

## Claims

1. A scooter type vehicle having a floor structure comprising:
a pair of step floors (3) on which feet of a rider sitting on a seat (4) are placed;
a tunnel portion (7) upwardly bulging between the left and right step floors (3);
a center cover (35) forming an upper portion of the tunnel portion (7) along with an inner cover (31) covering a head pipe (16) of the scooter type vehicle from the rear side;
a leg shield for covering from the front a foot (6) of the rider sitting on the seat (4); and
a tunnel portion side cover (32) which covers at least a lateral surface of the tunnel portion (7);
wherein the leg shield includes a footrest portion (64) extending forward from a corresponding step floor (3) and a front side cover (51) provided forward of the footrest portion (64) to cover a lateral surface of a front end of a vehicle body,
wherein the tunnel portion side cover (32) is integrally molded with the front side cover (51),
wherein a front end of the tunnel portion side cover (32) is joined to an upper end of the front side cover (51) in an inverse V-shape and the front end of the step floor (3) is allowed to conform to the inverse V-shape to integrally join the covers together, **characterised in that**
the tunnel portion side cover (32) is provided at a portion above the footrest portion (64) with a bulge portion (53) protruding laterally of the vehicle, and
wherein a recessed portion opened in the back and forth direction of the vehicle body is formed on the upper side of the bulge portion (53), said recessed portion being adapted to guide running air (W) from the front side of the vehicle body toward the rearward of the vehicle body.

2. The scooter type vehicle according to claim 1, wherein a front rising wall portion (61) joined to the footrest portion (64) of the step floor (3) is smoothly bent outwardly toward the front of the vehicle body.

3. The scooter type vehicle according to any one of claims 1 or 2, wherein a rear end of the tunnel portion side cover (32) is continuously and integrally joined to a front end of a rear side cover (36) disposed below the seat (4).

## Patentansprüche

1. Fahrzeug vom Scooter-Typ mit einer Bodenstruktur umfassend:
ein Paar von Trittböden (3), auf welchen die Füße eines auf einem Sitz (4) sitzenden Fahrers angeordnet werden;
einen Tunnelabschnitt (7), welcher zwischen den linken und rechten Trittböden (3) nach oben vorsteht;
eine zentrale Abdeckung (35), welche zusammen mit einer inneren Abdeckung (31), welche ein Kopfrohr (16) des Fahrzeugs vom Scooter-Typ von der Rückseite her abdeckt, einen oberen Abschnitt des Tunnelabschnitts (7) ausbildet;
ein Beinschild, um einen Fuß (6) des auf dem Sitz (4) sitzenden Fahrers von der Vorderseite her abzudecken; und
eine Tunnelabschnitt-Seitenabdeckung (32), welche wenigstens eine seitliche Fläche des Tunnelabschnitts (7) abdeckt;
wobei das Beinschild einen Fußauflageabschnitt (64) umfasst, welcher sich von einem entsprechenden Trittboden (3) nach vorne erstreckt, und
eine vordere Seitenabdeckung (51) umfasst, welche vorwärts von dem Fußauflageabschnitt (64) vorgesehen ist, um eine seitliche Fläche eines vorderen Endes eines Fahrzeugkörpers abzudecken,
wobei die Tunnelabschnitt-Seitenabdeckung (32) integral mit der vorderen Seitenabdeckung (51) geformt ist,
wobei ein vorderes Ende der Tunnelabschnitt-Seitenabdeckung (32) mit einem oberen Ende der vorderen Seitenabdeckung (51) in einer umgedrehten V-Form verbunden ist und es dem vorderen Ende des Trittbodens (3) ermöglicht ist, sich der umgedrehten V-Form anzupassen, um die Abdeckungen integral miteinander zu verbinden,
**dadurch gekennzeichnet,**
**dass** die Tunnelabschnitt-Seitenabdeckung (32) an einem Abschnitt über dem Fußauflageabschnitt (64) mit einem Ausbauchungsabschnitt (53) versehen ist, welcher seitlich des Fahrzeugs vorsteht, und
wobei ein Ausnehmungsabschnitt, welcher in der Längsrichtung des Fahrzeugkörpers geöffnet ist, an der Oberseite des Ausbauchungabschnitts (53) ausgebildet ist,
wobei der Ausnehmungsabschnitt dazu ausgebildet ist, Fahrtwind (W) von der Vorderseite des Fahrzeugkörpers zu der Rückseite des Fahrzeugkörpers zu leiten.

2. Fahrzeug vom Scooter-Typ nach Anspruch 1, wobei ein vorderer ansteigender Wandabschnitt (61), welcher mit dem Fußauflageabschnitt (64) von dem Trittboden (3) verbunden ist, sanft nach außen zur Vorderseite des Fahrzeugkörpers gebogen ist.

3. Fahrzeug vom Scooter-Typ nach einem der Ansprüche 1 oder 2, wobei ein hinteres Ende von der Tunnelabschnitt-Seitenabdeckung (32) kontinuierlich und integral mit einem vorderen Ende einer hinteren Seitenabdeckung (36) verbunden ist, welche unter dem Sitz (4) angeordnet ist.

## Revendications

1. Véhicule de type scooter ayant une structure de plancher comprenant :
une paire de planchers (3) sur laquelle les pieds d'un motocycliste assis sur un siège (4) sont placés ;
une partie de tunnel (7) faisant saillie vers le haut entre les planchers gauche et droit (3) ;
un couvercle central (35) formant une partie supérieure de la partie de tunnel (7) conjointement à un couvercle interne (31) recouvrant un tube de tête (16) du véhicule de type scooter à partir du côté arrière ;
une protection de jambe pour recouvrir à partir de l'avant d'un pied (6) du motocycliste assis sur le siège (4) ; et
un couvercle du côté de la partie de tunnel (32) qui recouvre au moins une surface latérale de la partie de tunnel (7) ;
dans lequel la protection de jambe comprend une partie de repose-pied (64) s'étendant vers l'avant à partir d'un plancher (3) correspondant et un couvercle du côté avant (51) prévu vers l'avant de la partie de repose-pied (64) pour recouvrir une surface latérale d'une extrémité avant d'un corps de véhicule,
dans lequel le couvercle du côté de la partie de tunnel (32) est moulé en un seul tenant avec le couvercle du côté avant (51),
dans lequel une extrémité avant du couvercle du côté de la partie de tunnel (32) est assemblée à une extrémité supérieure du couvercle du côté avant (51) selon une forme de V inversé et l'extrémité avant du plancher (3) est autorisée à se conformer à la forme de V inversé pour assembler d'un seul tenant les couvercles ensemble, **caractérisé en ce que** :
le couvercle du côté de la partie de tunnel (32) est prévu au niveau d'une partie située au-dessus de la partie de repose-pied (64) avec une partie de saillie (53) faisant saillie latéralement du véhicule, et
dans lequel une partie évidée ouverte dans les directions arrière et avant du corps de véhicule est formée sur le côté supérieur de la partie de saillie (53), ladite partie évidée étant adaptée pour guider l'air circulant (W) du côté avant du corps de véhicule vers l'arrière du corps de véhicule.

2. Véhicule de type scooter selon la revendication 1, dans lequel une partie de paroi en relief avant (61) assemblée à la partie de repose-pied (64) du plancher (3) est légèrement pliée vers l'extérieur vers l'avant du corps de véhicule.

3. Véhicule de type scooter selon l'une quelconque des revendications 1 ou 2, dans lequel une extrémité arrière du couvercle du côté de la partie de tunnel (32) est assemblée de manière continue et d'un seul tenant à une extrémité avant d'un couvercle du côté arrière (36) disposé au-dessous du siège (4).
